# EUROPEAN PATENT APPLICATION

(11) **EP 2 146 480 A2**
(43) Date of publication of application: **20.01.2010**
(21) Application number: 09008003.7
(22) Date of filing: 18.06.2009
(51) Int. Cl.: H04L 29/06

(54) **Method of configuring a security gateway and system thereof**

(30) Priority: 14.07.2008 US 172838
(71) Applicant: Tufin Software Technologies Ltd., 52522 Ramat Gan (IL)
(72) Inventor: Harrison, Reuven, Tel Aviv 64373 (IL); Persky, Yakov, Holon 58671 (IL)
(74) Representative: Kurig, Thomas

(57) **Abstract**

There is provided a rule-set generator and a method of automated configuration of a security gateway. The rule-set generator comprises a first repository configured to accommodate an initial set of conditions; a second repository configured to accommodate log records of communication events; and a processor operatively coupled to the first repository and the second repository and comprising a generator of transformation-based rule-set adapted for generating a transformation-based rule-set by transforming those accommodated log records which correspond to the initial set of conditions into respective rules, wherein values of fields engaged in each rule are generated as corresponding to values of fields in respective log record, and the action is generated as corresponding to the initial set of conditions; and wherein the processor is further configured to process the transformation-based rule-set so as to generate an operable rule-set.

## Description

### FIELD OF THE INVENTION

This invention generally relates to network security, and more particularly, to security gateways and methods of operating thereof.

### BACKGROUND OF THE INVENTION

Today, information security is one of the critical concerns in computer networks and services. Various methods have been developed for protection of various resources and services; usually these methods include implementation of one or more security policies, combinations and hierarchies thereof. Typically, a security policy includes control of inbound and outbound traffic related to certain resources. Such control is enforced with the help of a security gateway, which may comprise various devices and/or combinations thereof (e.g. switches, routers, firewalls, VPN devices, load balancers, etc.).

However, configuring the security gateway, especially in complex network architecture, presents an increasing challenge to security departments worldwide. The problem has been recognized in the Prior Art and various systems have been developed to provide a solution, for example:

US Patent No. 6,182,226 (Reid et al.) entitled "System and method for controlling interactions between networks" discloses a firewall used to achieve network separation within a computing system having a plurality of network interfaces. A plurality of regions is defined within the firewall and a set of policies is configured for each of the plurality of regions. The firewall restricts communication to and from each of the plurality of network interfaces in accordance with the set of policies configured for the one of the plurality of regions to which the one of the plurality of network interfaces has been assigned.

US Patent No. 7,032,022 (Shanumgam et al.) entitled "Statistics aggregation for policy-based network" discloses a unified policy management system for an organization including a central policy server and remotely situated policy enforcers. A central database and policy enforcer databases storing policy settings are configured as LDAP databases adhering to a hierarchical object oriented structure. Changes in the policy settings made at the central policy server are automatically transferred to the policy enforcers for updating their respective databases. Each policy enforcer collects and transmits health and status information in a predefined log format and transmits it to the policy server for efficient monitoring by the policy server. The system also provides for dynamically routed VPNs where VPN membership lists are automatically created and shared with the member policy enforcers. Updates to such membership lists are also automatically transferred to remote VPN clients. The system further provides for fine grain access control of the traffic in the VPN by allowing definition of firewall rules within the VPN.

US Patent No. 7,225,255 (Favier et al.) entitled "Method and system for controlling access to network resources using resource groups" encloses a method and device for configuring a firewall in a computer system employing a rule for controlling access between a source resource and a destination resource only if said source and destination resources belong to the same protection domain. At a central configuration machine, an access control rule is specified, including a scope, for each resource group, the scope, and thus the access control rule is capable of being interpreted by each of the plurality of firewalls differently depending on the value of the scope and network resource characteristics associated with each of the plurality of firewalls.

US Patent Application No. 2006/259,955 (Gunther et al.) entitled "Attribute-based allocation of resources to security domains" discloses a method for the optimized assignment of access rights to IT resources managed by means of a security management system and to a correspondingly adapted security management system. According to the invention a security domain is defined on the basis of at least one attribute of IT resources and a plurality of authorization profiles is provided for the security domain. User groups are assigned to the domain and linked to profiles provided for the domain. IT resources for which the security management is responsible are allocated to the domain in accordance with the attribute defining the security domain, as a result of which user groups assigned to the domain receive access rights to the IT resources allocated to the domain in accordance with the profiles linked to them. The invention permits the user groups to be issued with authorizations that are tailored to the requirements of the individual groups.

US Patent Application No. 2006/248,580 (Fulp et al.) entitled "Methods, systems, and computer program products for network firewall policy optimization" discloses a method and system for firewall policy optimization. According to one method, a firewall policy including an ordered list of firewall rules is defined. For each rule, a probability indicating a likelihood of receiving a packet matching the rule is determined. The rules are sorted in order of non-increasing probability in a manner that preserves the firewall policy.

US Patent Application No. 2006/031,472 (Rajavelu et al.) entitled "Network data analysis and characterization model for implementation of secure enclaves within large corporate networks" discloses a database storing information about known hosts, the applications or services they host, and the ports (known as confirmed ports) used by the applications/services. A static traffic analyzer analyzes traffic data and identifies packets communicating with (either sent to or received from) confirmed ports on hosts. A dynamic traffic analyzer analyzes the traffic data and identifies packets communicating with unconfirmed ports on hosts. A host identifier uses the resulting static and dynamic traffic to identify hosts for which firewall rules should be generated.

### SUMMARY OF THE INVENTION

Typically, the process of configuring a security gateway includes a process of manual configuration of the rule-set and requires a prior knowledge of IT resources and connectivity requirements. There is a need in the art to provide a new system and method facilitating an automated creation of an operable rule-set. The invention, in some of its aspects, is aimed to provide a novel solution facilitating automated configuration of a security gateway with no need for prior knowledge of network resources, topology and connectivity requirements. Certain prior knowledge may provide additional benefits for the automated configuration process in accordance with the present invention.

In accordance with certain aspects of the present invention, there is provided a generator of rules to be used for configuring a security gateway. The generator comprises: a first repository configured to accommodate an initial set of conditions; a second repository configured to accommodate log records of communication events; and a processor operatively coupled to the first repository and the second repository. The processor comprises a generator of transformation-based rule-set adapted for generating a transformation-based rule-set by transforming those accommodated log records which correspond to the initial set of conditions into respective rules, wherein values of fields engaged in each rule are generated as corresponding to values of fields in respective log record, and the action is generated as corresponding to the initial set of conditions. The processor is further configured to process the transformation-based rule-set so as to generate an operable rule-set.

In accordance with further aspects of the present invention the generator may further comprise a sniffing unit operatively coupled to the second repository and capable of capturing network traffic to be controlled by the security gateway and of generating respective log records to be accommodated in the second repository, wherein the processor is configured to define the action in all rules corresponding to the generated log records as "Accept".

In accordance with further aspects of the present invention the processor may further comprise a generator of consolidated rule-set operatively coupled to the generator of the transformation-based rule-set and configured to process the transformation-based rule-set as follows: to identify and remove duplicate rules among the transformation-based rules, thus giving rise to remaining rules, to provide each remaining rule with an initial hit count characterizing the number of respective duplicated rules before removing; to consolidate the remaining rules by source, destination and service respectively, thus giving rise to consolidated rules; and to provide each consolidated rule with a consolidated hit count calculated by summarizing the initial hit counts of the rules consolidated in the respective consolidated rule. The consolidation may comprise combining IP addresses of respective sources and/or destinations in a sub-network. If the range of IP addresses is non-consecutive and comprises missing IP addresses, combining in a sub-network may be provided in accordance with a Subnet Threshold Parameter (STM) characterized by a relationship between an allowable number of the missing IP addresses in a sub- network and a number of addresses in a sub-network resulting from said combining.

In accordance with further aspects of the present invention the processor may further comprise an optimizing block operatively coupled to the generator of consolidated rule-set and/or the generator of the transformation-based rule-set, wherein the optimizing block is configured to check if value(s) of one or more fields of a transformed rule and/or a consolidated rule fit certain predefined conditions, and if "Yes", to replace said value(s) by predefined value(s) corresponding to the predefined condition.

In accordance with further aspects of the present invention, the rule-set generator may be at least partly integrated with the security gateway.

In accordance with other aspects of the present invention there is provided a method of automated configuration of a security gateway. The method comprises setting-up an initial set of conditions; obtaining log records of communication events corresponding to the initial rule-set so as to obtain a sufficient amount of log records, said sufficient amount characterized by achieving a certain threshold and/or by terminating a certain substantial collection period; transforming the obtained log records into respective rules, wherein source, destination and service fields in each rule are generated as corresponding to source, destination and service values in respective obtained log record, and the action is generated as corresponding to the initial set of conditions, thus giving rise to a transformation-based rule-set; and processing the transformation-based rule-set so as to generate an operable rule-set.

In accordance with further aspects of the present invention the initial set of conditions may be related to all traffic to be controlled by the security gateway. The initial set of conditions may comprise only one rule, this rule permitting any traffic between any data network resources. At least part of the obtained log records may be generated by the security gateway configured to control at least part of the traffic in accordance with the initial set of conditions. Alternatively or additionally, at least part of the log records may be obtained by sniffing the traffic to be controlled by the security gateway and logging respective communication events.

In accordance with further aspects of the present invention the processing of transformation-based rule-set further comprises: identifying and removing duplicate rules among respective transformation-based rules, thus giving rise to remaining rules, wherein each remaining rule is provided with an initial hit count characterizing the number of respective duplicated rules before removing; and consolidating the remained rules by source, destination and service respectively, thus giving rise to consolidated rules, wherein each consolidated rule is provided with a consolidated hit count calculated by summarizing the initial hit counts of the rules consolidated in the respective consolidated rule. The consolidating may further comprise combining a range of IP addresses of respective sources and/or destinations in a sub-network. If the range of IP addresses is non-consecutive and comprises missing IP addresses, combining in a sub-network may be provided in accordance with a Subnet Threshold Parameter (STM) characterized by a relationship between an allowable number of the missing IP addresses in a sub- network and a number of addresses in a sub-network resulting from said combining.

In accordance with further aspects of the present invention, the method may further comprise checking if value(s) of one or more fields of a transformed rule and/or a consolidated rule fit certain predefined conditions, and if "Yes", replacing these value(s) by predefined value(s) corresponding to the predefined condition.

Among advantages of certain aspects of the present invention is decreasing human involvement in the process of initial and on-going configuration of the security gateway, thus enabling substantial error and cost reduction even for large and complex networks.

### BRIEF DESCRIPTION OF THE DRAWINGS

In order to understand the invention and to see how it may be carried out in practice, an embodiment will now be described, by way of non-limiting example only, with reference to the accompanying drawings, in which:
**Fig.1** illustrates a generalized network environment where the present invention may be implemented;
**Fig. 2** illustrates a generalized flow diagram of configuring the security gateway in accordance with certain embodiments of the present invention;
**Fig. 3** illustrates a generalized flow diagram of generating a rule-set in accordance with certain embodiments of the present invention; and
**Fig. 4** illustrates a generalized functional block diagram of a rule-set generating tool in accordance with certain embodiments of the present invention.

### DETAILED DESCRIPTION OF EXEMPLARY EMBODIMENTS

In the following detailed description, numerous specific details are set forth in order to provide a thorough understanding of the invention. However, it will be understood by those skilled in the art, that the present invention may be practiced without these specific details. In other instances, well-known methods, procedures, components and circuits have not been described in detail so as not to obscure the present invention. In the drawings and descriptions, identical reference numerals indicate those components that are common to different embodiments or configurations.

Unless specifically stated otherwise, as apparent from the following discussions, it is appreciated that throughout the specification discussions utilizing terms such as "processing", "computing", "calculating", "determining", "counting", "generating", "obtaining" or the like, refer to the action and/or processes of a computer that manipulate and/or transform data represented as physical, such as electronic, quantities and/or representing the physical objects. The term "computer" should be expansively construed to cover any kind of electronic device with data processing capabilities, including, by way of non-limiting example, personal computers, servers, computing system, communication devices, storage devices, processors e.g. digital signal processors (DSP), microcontrollers, field programmable gate array (FPGA), application specific integrated circuit (ASIC), etc.) and other electronic computing devices.

The operations in accordance with the teachings herein may be performed by a computer specially constructed for the desired purposes or by a general purpose computer specially configured for the desired purpose by a computer program stored in a computer readable storage medium.

Embodiments of the present invention are not described with reference to any particular programming language. It will be appreciated that a variety of programming languages may be used to implement the teachings of the inventions as described herein.

The term "criterion" used in this patent specification should be expansively construed to include any compound criterion, including, for example, several criteria and/or their logical combinations.

The term "configuring a security gateway" used in this patent specification should be expansively construed to include setting up a new rule-set for a new security gateway or existing security gateway, and/or replacing a pre-configured rule-set or parts thereof, and/or refining the pre-configured rule-set (e.g. for supporting newly added physical and/or logical resources and groups thereof, for on-going maintenance, etc.).

The references cited in the background teach many principles of configuring a security gateway that are applicable to the present invention. Therefore the full contents of these publications are incorporated by reference herein where appropriate for appropriate teachings of additional or alternative details, features and/or technical background.

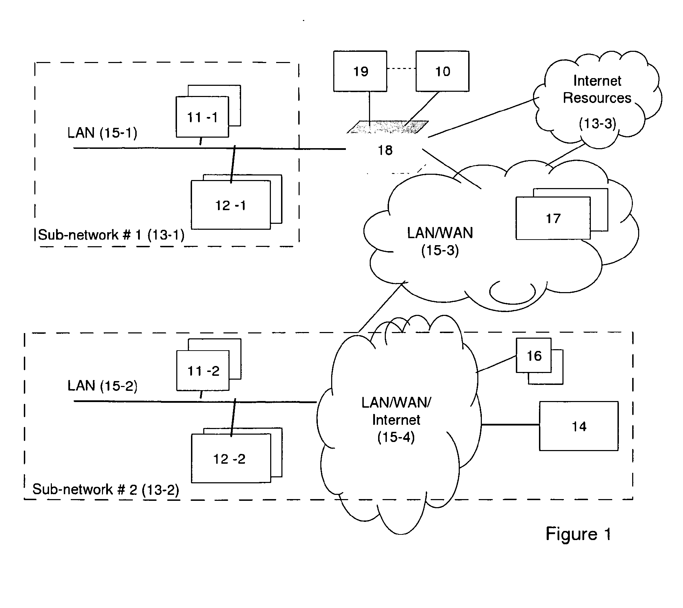

Bearing the above in mind, attention is drawn to **Fig. 1** schematically illustrating an exemplary data network where the present invention may be implemented. The data network comprises a plurality of intranet network resources (e.g. workstations **11-1, 11-2,** and/or servers **12-1, 12-2,** web-based application server **14,** resources associated with mobile users **16,** etc.) grouped in sub-networks **13-1** and **13-2.** The sub-networks, as well as the resources within the sub-networks, may be operatively coupled via one or more local **(15-1, 15-2)** or wide area **(15-3, 15-4)** communication networks (including Internet) or combinations thereof. The communication network comprises one or more communication devices **17** (e.g. switches, routers, bridges, etc.) facilitating data transfer and may be private, public or combined. One or more communication networks (typically, private communication networks) may constitute a part of the intranet. The intranet resources (including client based resources, web-based resources, etc.) are predefined as belonging to the intranet. The intranet resources may be grouped in two or more logical groups (sub-networks) in accordance with different criterion. For example, the grouping may be provided in accordance with network architecture (e.g. resources connected by certain LAN) and/or business structure (e.g. resources related to a certain business unit) and/or business function (e.g. resources related to a certain application/business task) and/or level of user's trust and/or level of classified information, etc.

The data network may include also resources, other than intranet, by way of non-limiting example, Internet resources (other than web-based intranet resources); these resources may be grouped, for example, in one or more sub-networks **13-3.**

A security gateway **18** is operatively coupled to the sub-network **13-1** and controls inbound and outbound traffic related to the sub-network and resources thereof. Similar, the security gateway **18** or other (not shown) security gateway(s) may control inbound and outbound traffic related to sub-network **13-2** and/or parts thereof. The security gateway may comprise, for example, one or more firewalls or routers with respective load balancers, intrusion detection/prevention systems, VPN devices and/or other equipment facilitating network and/or application security. The security gateway **18** operates in accordance with one or more rules controlling, at least, inbound and/or outbound traffic with regard to respective resources. These rules (including combinations and/or hierarchies thereof) are referred to hereinafter as a rule-set. A single rule typically includes several fields (e.g. source (IP address and/or port), destination (IP address and/or port), service type, user, application, etc.), a condition (including criterion and logic with regards to the field values) to be satisfied; and an action which shall be drawn from the rule when the condition is satisfied. The fields included in such conditions are referred to hereinafter as "fields engaged in the rules". The action in the rule may specify accepting or denying the respective traffic, authentication and encryption, etc. A field may be characterized by a value or a range of values, e.g. a range of TCP ports, a range of IP addresses in a LAN defined by a mask, etc.

Communication events, i.e. events related to inbound and/or outbound traffic controlled by the security gateway, may be logged. Log recording is triggered by matching a certain rule, while the format of the log record(s) is determined by the log configuration specified in the policy and/or respective rule. By way of non-limiting example, log record assigned to a rule comprises time and date of the recorded event, an identifier of the respective rule, event specification (e.g. the source and destination addresses of the access session, the name of service attempted, used protocol, source and designation ports, etc.), action taken, user, application, the security gateway that generated the log entry, etc. Log records may further comprise derivatives of information related to certain events (e.g. hit-count data). Log records may be accommodated in the security gateway and/or exported to other systems (e.g. security management block) via standard (e.g. syslog, SNMP, NetFlow etc.) or proprietary (e.g. OPSEC, etc.) protocols.

The security gateway **18** is operatively connected to a security management block **19.** The security management block may be fully or partly integrated with the security gateway or may be implemented in one or more stand-alone servers or integrated with other network resources. The security management block functions may include providing a backend for the policy editor GUI, monitoring the operation of the security gateway, storing the rule-set database and log database, reporting, etc. In certain embodiments the rule-set database and the log database (or respective parts thereof) may be accommodated in the security gateway and/or the management block.

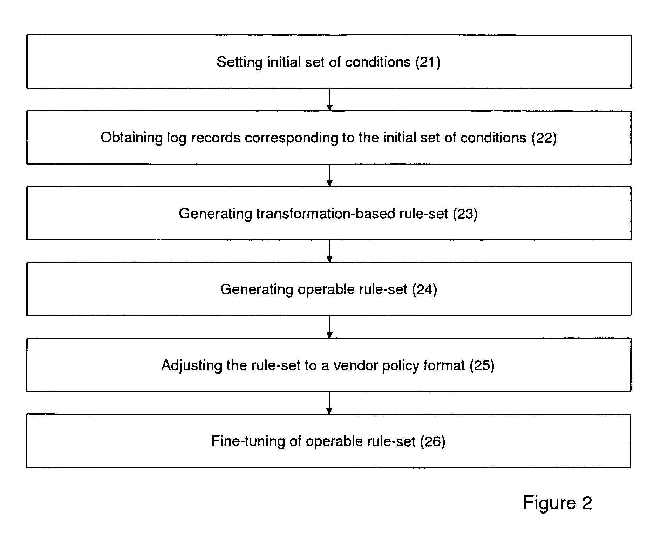

In accordance with certain embodiments of the invention, the security gateway **18** and/or the security management block **19** are operatively connected to a rule generator **10** configured to generate an operable rule-set for configuring the security gateway as will be further detailed with reference to **Figs. 2-4****.** The rule generator may be fully or partly integrated with the security gateway and/or the security management block, or may be implemented in one or more stand-alone servers, or fully or partly integrated with other devices (including sub-network resources, communication devices, security devices, etc.)

Note that the invention is not bound by the specific architecture described with reference to **Fig. 1**. Those versed in the art will readily appreciate that the invention is, likewise, applicable to any network architecture facilitating protection of data network resources in accordance with a rule-set installed at any suitable security gateway capable of controlling the respective traffic. The teachings of the present invention are applicable to any suitable security gateway enforcing a rule-set controlling respective traffic.

Referring to **Fig. 2**, there is illustrated a generalized flow diagram of configuring the security gateway in accordance with certain embodiments of the present invention. The process starts with setting an initial set of conditions **(21).** The term "initial set of conditions" used in this patent specification should be expansively construed to include any combination of permissive rules configured to be applied to the controlled traffic and/or to respective log records in accordance with appropriate teachings of the present invention. The permissive rules may include authentication rules and/or VPN rules and/or any other rules applicable to allowable traffic controlled by a security gateway.

By way of non-limiting example, this initial set of conditions may be applied to all traffic controlled by the security gateway and comprise only one rule, this rule permitting any traffic between any respectively controlled data network resources; such initial permissive set of conditions does not require prior knowledge of the data network resources. For example, the rule may be defined as "Accept-All-And-Log", i.e. source, destination and service fields in the rule will be defined as "Any", an action field will be defined as "Accept" and all traffic events will be logged. By way of non-limiting example, such embodiments may be useful when configuring a new security gateway.

In other embodiments of the invention, the initial set of conditions may be related to a subset of the traffic to be controlled by the gateway. By way of non-limiting example, such initial set of conditions may comprise only one rule permitting traffic between specified resources (e.g. any traffic between resources connected by certain LAN, any traffic between resources within predefined groups of IP addresses, etc.). Such initial set of conditions requires certain prior knowledge of the network, but still does not require detailed knowledge of the resources, applications, services and/or topology. Such embodiments may be useful, for example, for configuring (first-time configuration or on-going maintenance) a rule-set related to traffic between two or more sub-networks characterized by IP address groups with unknown traffic patterns between them, adding additional rules to the pre-configured rule-set to support newly added physical and/or logical resources and groups thereof or new business connectivity requirements, refining the pre-configured rule-set, etc. By way of another non-limiting example, the permissive "Accept-All-And-Log" rule may be added as a last rule in the pre-configured rule-set. Such an embodiment may be useful, for example, for on-going refinement and tightening of the pre-configured rule-set with no impact on the currently allowed traffic.

In certain embodiments of the invention, the security gateway is initially configured to operate, at least with regard to a part of the traffic, in accordance with the initial set of conditions, and at least log records of respective operations are collected during a certain substantial period of time (e.g. 1 week, 1 month, etc.) and/or until obtaining a sufficient amount of data, and obtained **(22)** by the rule generator **10** from the security gateway **18** and/or security management block **19.**

In other embodiments of the invention the configuration of the security gateway may be kept unchanged, all log records are collected during a certain substantial period of time and/or until obtaining sufficient amount of data, and the rule generator **10** further selects log records corresponding to the initial set of conditions, thus obtaining (22) log records for further analyses.

In other embodiments of the invention the rule generator **10** may be configured as a sniffer capable of monitoring and/or capturing inbound and outbound traffic with regard to resources of interest, to log respective communication events and to collect such log records during a certain substantial period of time and/or until obtaining a sufficient amount of data. Likewise, the log records may be obtained by the rule generator from an external sniffer and/or external database. The rule-generator further selects log records corresponding to the initial set of conditions, thus obtaining **(22)** log records for further analyses.

The log records are collected (e.g. by the security gateway and/or by the security management block and/or by the rule generator) until obtaining a sufficient amount of log records characterized, for example, by achieving predefined/configurable threshold(s); until termination after a predefined collection period, etc. One month may be a reasonable default value for many organizations. The duration of the collection period depends on intensity of traffic between involved network resources. There exists a tradeoff between the number of collected logs (and, accordingly, the duration of the collection period) and accuracy of the resulting operable rule-set generated in accordance with the gathered information. The duration of the collection period may be configurable in accordance with different criterion, e.g. the total number of collected logs, the number of logs collected per certain types of traffic and/or service and/or destination/source addresses, etc. In certain embodiments of the invention the duration of the collection period may be defined in accordance with a certain threshold, and operation of the security gateway under the initial set of conditions and/or collecting log records for further applying the initial set of conditions will be continued until the threshold is achieved. The threshold may be configured, for example, as a total number of collected respective logs (e.g. 5 million logs), a total number of collected respective logs of some types of traffic (especially for a rare traffic, e.g. a backup restore service), a total number of collected respective logs and relationship thereof of different types of traffic (e.g. 5% of certain traffic among not less than 1 million collected log records), total number of collected logs in relation to traffic per pre-configured rule-set, etc.

The collecting period may be a period prior to the security gateway operation and/or during the operation (e.g. on an on-going basis for refining the rule-base, amending rules to reflect new connectivity requirements, etc.).

The rule generator transforms (23) the obtained log records into respective rules, wherein the field values (e.g. source, destination and service values) in each rule are generated as corresponding to the field values (e.g. source, destination and service values) in respective obtained log record, and the action in the rule is generated as corresponding to the initial set of conditions. For log records obtained resulting from the operation of the security gateway, an action corresponding to the initial set of conditions is the action derived from respective log record. For log records resulting from sniffing the traffic and/or obtained from external sources, an action corresponding to the initial set of conditions is the action defined in the initial set of conditions as corresponding to the respective field values. By way of non-limiting example, if the initial set of conditions comprises merely "Accept-All-And-Log" rule, the action in all rules will be defined as "Accept". These generated rules are referred to hereinafter as transformation-based rules. The transformation is provided only with respect to the log records related to communication events corresponding to the initial set of conditions. By way of non-limiting example, if the initial set of conditions is related to a part of the traffic, and the collected log records are related to all traffic, the transformation will be provided only for the log records having the same source, destination and service fields (and, optionally, other fields) as included in the initial set of conditions.

Prior to the transformation, the collected log records may be further filtered in accordance with additional criteria as, by way of non-limiting example, time of day (e.g. only working hours) and/or traffic between certain type of resources (e.g. from Internet to DMZ), and/or certain rules in the rule base, etc.

Steps (22) and (23) may be implemented in different manners. For example, the log records may be accumulated during the collection period and be transformed into respective rules upon collection of a sufficient amount of log records; alternatively, each collected log record may be transformed into a rule substantially when obtained, and the respective rules may be accumulated during the collection period; other implementations are also possible. Since the log formats of security gateway vendors may be different, in certain embodiments of the invention the log records may be normalized before transformation, i.e. converted from a specific security gateway vendor's format to a standardized internal representation.

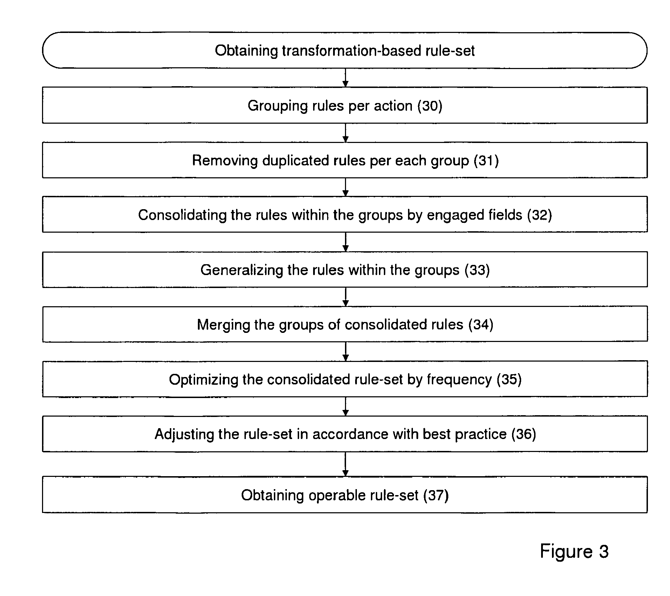

As will be further detailed with reference to **Fig. 3****,** the generated transformation-based rules are used by the rule generator for generating **(24)** an operable rule-set, i.e. a rule-set capable of being put into practice for regular operation of the security gateway. The generated rule-set may be used for configuring a new security gateway, and/or replacing a respective part of a pre-configured rule-set and/or amending the pre-configured rule-set with new rules related to new resources. The generated operable rule-set may be further adjusted (25) in accordance with policy format used by certain security gateway vendors. Optionally, the operations **(23) - (25)** may be repeated using the generated operable rule-set instead of the initial set of conditions, thus, if necessary, providing fine-tuning (26) for the generated operable rule-set. If the operable rule-set is added to a pre-configured rule set (as an addition and/or replacement), the fine-tuning may further include identification and special marking of rules that contradict rules in the pre-configured rule-set. Adding the operable rule-set to the pre-configured rule-set may further comprise optimization of the resulting rule-set.

Those versed in the art will readily appreciate that the invention is, likewise, applicable to VPNs and authentication rules, wherein the initial set of conditions will be defined, additionally or alternatively, with regard to VPN/authentication rules.

Referring to **Fig. 3****,** there is illustrated a generalized flow diagram of the process of generating **(24)** the operable rule-set provided by the rule generator. As was detailed with reference to **Fig. 2****,** the configuration process includes generating the transformation-based rule-set for further processing. This further processing starts with grouping **(30)** the rules in accordance with the action defined for the respective rules during the transformation. The grouping is provided in accordance with a predefined criterion, as, by way of non-limiting example, "group together the rules with the same actions" or "group together the rules with non-contradicting actions", etc. Those versed in the art will readily appreciate that the grouping operation **(30)** may be skipped if the initial set of conditions comprises only one type of the rules (e.g. only "authenticate and accept" rules), and, accordingly, the transformation-based rule-set comprises only one group of rules.

The rule generator further provides identifying and removing duplicate rules **(31)** among each group of the transformation-based rules. Two or more rules are considered to be duplicated if they have the same values of fields engaged in the rules (e.g. same values of source, destination, service, user and/or application fields). I n practice, removing the duplicate rules may reduce the number of transformation-based rules to be analyzed by several orders of magnitude. Each remaining rule is provided with an initial hit count characterizing the number of rules among the transformed rules duplicating the respective rule. **Table 1** illustrates, by way of non-limiting example, a fragment of the transformation-based rule-set after removing the duplicated rules related to the same action.

**Table 1**

| Source | Destination | Service | Action | Initial Hit Count |
|---|---|---|---|---|
| 192.168.1.100 | 192.168.3.5 | HTTP | Accept | 30 |
| 192.168.1.32 | 192.168.5.8 | HTTP | Accept | 20 |
| 192.168.1.33 | 192.168.5.9 | HTTP | Accept | 35 |
| 192.168.1.34 | 192.168.5.8 | HTTP | Accept | 12 |
| 192.168.1.35 | 192.168.5.8 | HTTP | Accept | 44 |
| 192.168.1.101 | 192.168.3.5 | HTTP | Accept | 13 |
| 192.168.1.34 | 192.168.5.9 | HTTP | Accept | 7 |
| 192.168.1.32 | 192.168.5.9 | HTTP | Accept | 60 |
| 192.168.1.35 | 192.168.5.9 | HTTP | Accept | 14 |
| 192.168.1.33 | 192.168.5.8 | HTTP | Accept | 45 |

For each group the remaining rules are further consolidated **(32)** by the fields engaged in the respective rules. Consolidation by fields may be provided in any order of the fields.

For example, consolidation by source includes the following operations:
- identifying the rules with same first values in destination fields and same second values in service fields;
- identifying among these rules the rules with third values in the source fields fitting certain criterion (e.g. consecutive values and/or values belonging to a group characterized by a predefined criterion, etc.);
- combining the source fields of the identified rules as a range of respective third values, said range characterized by a minimal value and a maximal value, and/or a derivative of said range (e.g. sub-network);
- aggregating the identified rules in one rule with the first value in the destination field, second value in the service field and the range of respective third values in the source field;
- amending the hit counter, summarizing initial hit counters in the aggregated rules.

The consolidation of rules by destination, by service and/or by other field is provided in a similar manner. Likewise, the rules may be consolidated by other fields engaged in the rules, as, for example, users, applications, etc. The consolidation process may be repeated until some condition is met, for example, until all possible consolidation by all fields is provided, thus giving rise to a consolidated rule-set.

It should be noted that the examples in **Tables 1, 2** and **3,** for the purpose of simplification, ignore the typical approach when the first and last addresses of a standard IPv4 subnet are reserved and are not used in most cases. Optionally, the consolidation process may take these reservations into consideration as illustrated in **Tables 4, 5** and **6.**

**Table 2** illustrates, by way of non-limiting example, the rule-set illustrated in **Table 1** and further consolidated by source.

**Table 2**

| Source | Destination | Service | Action | Hit Count |
|---|---|---|---|---|
| 192.168.1.100/31 | 192.168.3.5 | HTTP | Accept | 43 |
| 192.168.1.32/30 | 192.168.5.8 | HTTP | Accept | 121 |
| 192.168.1.32/30 | 192.168.5.9 | HTTP | Accept | 126 |

**Table 3** illustrates, by way of non-limiting example, the rule-set illustrated in **Table 2** and further consolidated by destination.

**Table 3**

| Source | Destination | Service | Action | Hit Count |
|---|---|---|---|---|
| 192.168.1.100/31 | 192.168.3.5 | HTTP | Accept | 43 |
| 192.168.1.32/30 | 192.168.5.8/31 | HTTP | Accept | 247 |

The IP addresses in the source and the destination fields in the examples illustrated in **Tables 1, 2** and **3** were consecutive, and the corresponding ranges of source and destination values were combined into sub-networks by applying appropriate subnet masks.

However, in many actual cases the values in the source and/or the destination fields to be combined for rules consolidation are not consecutive. **Table 4** illustrates, by way of non-limiting example, a fragment of the transformation-based rule-set (after removing the duplicated rules) having the same destination and service values, while the source values are not consecutive.

**Table 4**

| **Source** | **Destination** | **Service** | **Action** | **Hit Count** |
|---|---|---|---|---|
| 192.168.1.1 | 192.168.5.8 | FTP | Accept | 35 |
| 192.168.1.2 | 192.168.5.8 | FTP | Accept | 23 |
| 192.168.1.5 | 192.168.5.8 | FTP | Accept | 18 |
| 192.168.1.6 | 192.168.5.8 | FTP | Accept | 13 |

There are certain advantages of combining a range of IP addresses in a sub-network, e.g. for simplification and reliability of network management and, in particular, for effective network traffic control. However, combining a non-consecutive range of source and/or destination addresses in a subnet will require filling the "gaps" between the IP addresses (i.e. defining missing consecutive addresses as trusted); this may open security breaches and pose a security threat. In accordance with certain embodiments of the present invention, there is proposed to use, when consolidating the rules, a configurable Subnet Threshold Parameter (STM) as a criterion for combining a range of IP addresses in a subnet. STM characterizes the desired balance between the compactness of the rule set and the required security level and may be configured by Security Manager for the entire intranet and/or parts thereof. The STM is characterized by a relationship between an allowable number of unknown (missing during consolidation) IP addresses in the subnet and the total number of the IP addresses in the subnet. The relationship may also depend on the number of consolidated rules, security levels of one or more consolidated fields, ratio of security levels of transformation-based and consolidated rule-sets, etc.

By way of non-limiting example, the STM may be defined as a ratio of the largest allowable gap in the network IP addresses to a number of IP addresses in a resulting sub-network. For example, if STM is configured as equal to 0%, the range of source values in the rule-set illustrated in **Table 4** cannot be consolidated into any sub-network. If STM is configured as equal to 25%, the rules illustrated in **Table 4** may be consolidated into two rules with regard to two sub-networks as illustrated in **Table 5,** and if STM is configured as equal to 40%, the consolidation may result in 1 rule with regard to one sub-network as illustrated in **Table 6.**

**Table 5**

| Source | Destination | Service | Action | Hit Count |
|---|---|---|---|---|
| 192.168.1.0/30 | 192.168.5.8 | FTP | Accept | 58 |
| 192.168.1.4/30 | 192.168.5.8 | FTP | Accept | 31 |

**Table 6**

| Source | Destination | Service | Action | Hit Count |
|---|---|---|---|---|
| 192.168.1.0/29 | 192.168.5.8 | FTP | Accept | 89 |

When consolidating by service the aggregation may be provided if the service belongs to a predefined group of services (e.g. HTTP and HTTPS or different types of ICMP).

Additional fields can be consolidated in similar ways and STM-like criteria can be defined to control their consolidation.

By way of non-limiting example, in a certain practical embodiment of the invention there were obtained 5,000,000 log records further transformed into respective rules. The number of rules was reduced to 28,000 after eliminating the duplicate rules. The rule-base consisting of 2200 rules was obtained after the consolidation by source, destination and service. Combining the ranges of non-consequent IP addresses in subnets and further consolidation of rules per updated field values has provided the following results depending on STM parameter:

| STM | Rule-Base size |
|---|---|
| 0% | 2200 |
| 20% | 1328 |
| 40% | 259 |
| 80% | 78 |

The value STM = 40% was considered in this non-limiting example as providing a satisfactory balance between the rule-base compactness and security requirements.

Alternatively or additionally, combining IP addresses in sub-networks during consolidation process may be provided in accordance with a Minimal Subnet Size (MSS) criterion characterizing the minimal (predefined/configurable) size of sub-network resulting from consolidation process and/or in accordance with network classes A, B and C characterizing the size of resulting sub-networks.

In certain embodiments of the invention, STM and/or MMS values may be configured differently for networks with different size and/or for different names/address ranges and/or other characteristics of networks and resources therein.

Certain embodiments of the invention may support more complicated transformation and consolidation processes, some of them requiring certain prior knowledge about the network resources. For example, in certain networks there may be multiple ports associated with the same source and/or destination IP address, prior knowledge of these port groups facilitates further rule-set optimization. For example, in a case when certain e-mail clients use multiple ports to contact a mail server, there will be a plurality of obtained log records having the same source, the same destination IP but different destination ports. Accordingly, if the generating rule-set is designated to a secure gateway supporting rules with multiple ports, the respective plurality of rules in the transformation-based rule-set will be consolidated into one rule. Based on prior knowledge, the numeric values of objects may be further replaced by their names.

In certain embodiments of the invention, prior knowledge of the network resources may be used for generalizing **(33)** the transformation-based rules-set and/or consolidated rule-set in accordance with pre-defined rules related to prior known objects such as services, users, applications, etc. In order to provide generalization of rules, the rule generator checks if values of one or more fields of a rule fit certain predefined conditions (typically related to such prior knowledge), and if "Yes", replaces the field value(s) by a predefined value corresponding to the condition.

By way of non-limiting example, the conditions may be predefined as following:
a) source is contained in an internal network;
b) destination is contained in an external network;
c) service is HTTP or HTTPS;
d) range of destinations contains over 100 IP addresses.

If a certain rule fits all these conditions, destination shall be replaced by the pre-defined value "ANY".

By way of another non-limiting example, the conditions may be predefined as following:
a) source is corporate mail server
b) service is SMTP

If a certain rule fits these conditions, destination shall be replaced by the predefined value "ANY".

By way of another non-limiting example, the conditions may be predefined as following:
a) source is contained in an external network;
b) destination is contained in a corporate web farm;
c) service is HTTP or HTTPS;

If a certain rule fits these conditions, source shall be replaced by the predefined value "ANY" and destination shall be replaced by the corporate web farm.

Such conditions can be generalized as templates and built into the rule generator (10). Users may optionally provide values for the template parameters (internal network, web farm, required IP addresses etc.).

The consolidating and generalizing operations may be further provided to the generated consolidated rule-set, thus removing rules which were not considered as duplicated before consolidation.

In all the IP manipulations, network address translation (NAT) may be taken into account. By way of non-limiting example, the described operations may be provided in a similar manner over translated source/destination addresses and port numbers appearing in the logs so as to build an appropriate rule-set. The security gateway will operate in accordance with this rule-set and use its respective NAT mechanism to control the actual traffic.

The consolidated and, optionally, generalized rule-sets for each group are further merged **(34)** into a resulting consolidated rule-set. If all rules have the same action (i.e., there is one group only), then no merging is needed.

Combining different groups of rules may require avoiding unwanted behavior for potentially overlapping rules with conflicting actions. In certain embodiments of the present invention, the consolidation **(32)** within the groups is provided in a manner enabling that the traffic space (i.e. all network traffic that corresponds to the values of engaged rule fields) of consolidated rules does not expand beyond the traffic space of the rules with the same action in the initial set of conditions. Thus, the groups with different actions will have no overlapping traffic space.

For example, for the initial set of conditions illustrated in the following **Table 7,** the "Authentication" group of consolidated rules will be contained within the traffic space defined as: (Source: 10.0.0.0/28, Destination: 192.168.1.1, Service: HTTP), while the "Accept" group of the consolidated rules will be contained within the traffic space defined as: (Source: 10.0.0.0/24 but not 10.0.0.0/28, Destination: 192.168.1.1, Service: HTTP).

**Table 7**

| No. | Source | Destination | Service | Action |
|---|---|---|---|---|
| 1 | 10.0.0.0/28 | 192.168.1.1 | HTTP | Authenticate |
| 2 | 10.0.0.0/24 | 192.168.1.1 | HTTP | Accept |

The consolidated rule-set is further optimized with a help of respective hit counts thus giving rise **(37)** to an operable rule-set. The operable rule-set may be put into practice for regular operation of the security gateway. The operable rule-set may be generated by reordering the rules in accordance with their hit count in the consolidated rule-set **(35),** wherein the more frequent rules are put higher in the rule table. **Table 8** illustrates, by way of non-limiting example, the consolidated rule-set illustrated in **Table 3** further optimized by frequency.

**Table 8**

| Source | Destination | Service | Action | Count |
|---|---|---|---|---|
| 192.168.1.32/30 | 192.168.5.8/31 | HTTP | Accept | 247 |
| 192.168.1.100/31 | 192.168.3.5 | HTTP | Accept | 43 |

Alternatively or additionally, reordering may be provided by values in the rule fields or other criteria.

Generation of an operable rule-set may include further filtering the consolidated rule-set in order to exclude certain rules. By way of non-limiting example, the filtering may be provided to exclude rules with hit count less than a certain threshold, and/or to exclude rules that are fully overlapped by a combination of other rules, and/or to exclude rules resulting from logs recorded during certain time periods, and/or to exclude rules that may allow certain explicitly forbidden traffic.

Optionally, generating the operable rule set may include further adjustment according to vulnerability black lists, organizational policies, best practices, regulations, and other standards for security gateways **(36).** This operation may include, for example, amending the consolidated rule-set by predefined rules (i.e. rules which should always be present in the rule base), special marking of the generated rules, etc. A non-limiting example of a predefined rule is a "cleanup rule" - the last rule in the rule-set saying "drop all that is not explicitly allowed". This rule may be marked by a special sign to indicate that it was added to the rule-set in order to conform to the known best practice. On the other hand, some generated rules may be marked as *a priori* dangerous in accordance with certain best practices (e.g. a rule allowing all types of ICMP traffic). Rules may also be marked as dangerous if they violate an organizational policy or if they appear to match a risky pattern (e.g. a port scan). If the newly-added consolidated rule-set comprises rules that contradict pre-configured rules, these rules may also be marked. Later a security manager may decide whether to leave such rules in the rule base. In certain embodiments of the invention such potentially dangerous rules may be excluded from the consolidated rule-set.

**Tables 9** and **10** illustrate non-limiting examples of tightening the pre-configured rules in accordance with certain embodiments of the present invention. Table 8 illustrates a rule in a pre-configured rule set.

**Table 9**

| Source | Destination | Service | Action |
|---|---|---|---|
| src1, src2 | dst1, dst2 | FTP | Accept |

If, in an exemplary case, the analysis of the obtained records shows that all the actual traffic goes only from src1 to dst2 and from src2 to dst1, the original rule may be split into two rules as shown in **Table 10**. Accordingly, the rule base will be tightened, thus eliminating potential security holes.

**Table 10**

| Source | Destination | Service | Action |
|---|---|---|---|
| src1 | dst2 | FTP | Accept |
| src2 | dst1 | FTP | Accept |

The rule generation process described above generates not only the rule set, but also other firewall entities, such as network objects. The user may study the obtained objects and compare them to the actual networks in the organization.

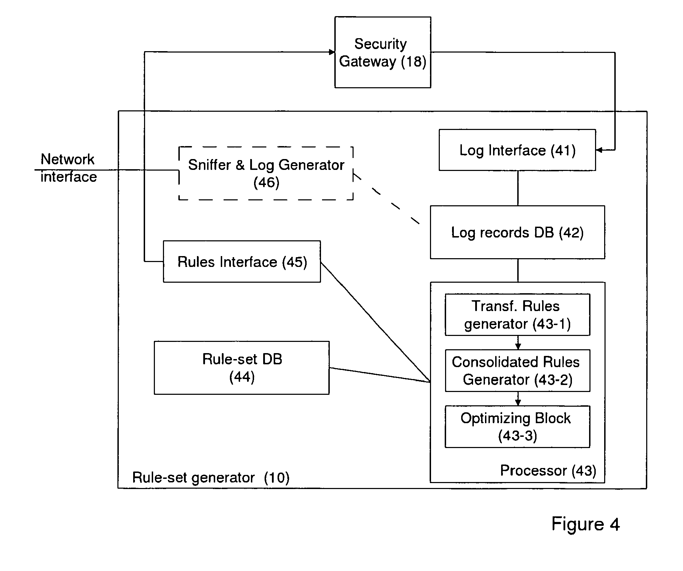

Referring to **Fig. 4****,** there is illustrated a generalized block-diagram of a rule generator in accordance with certain embodiments of the present invention. The rule generator **(10)** may be implemented as a standalone platform or integrated, fully or partly, with other network resources (e.g. firewall or other security gateway, security management module, sniffer, switch, etc.). The rule generator comprises a processor **(43)** operatively coupled to a log interface **(41).** The log interface is configured to obtain log records generated by the security gateway and to forward them to the processor and/or to a log records repository **(42)** operatively coupled to the processor. The processor **43** is configured to provide necessary processing of the obtained log records and to generate an operable rule-set in accordance with operations detailed with reference to **Figs. 2-3****,** to forward, if necessary, the obtained information and/or derivatives thereof for accommodation in one or more data repositories operatively coupled to the processor, and to provide necessary data management. The data repositories may include the log records repository **(42),** a rule-set DB **(44),** a best-practice repository (not shown) and others. The processor is further operatively coupled to a rules interface **(45).** The rules interface is configured to forward the initial set of conditions to the processor and operative rule-set to the security gateway. The processor comprises a transformation-based rule generator **43-1** configured to generate transformation-based rules and operatively coupled to a consolidated rule generator **43-2** configured to generate consolidated rules as detailed with reference to **Fig. 3****.** Optionally, the processor may comprise an optimizing block **43-3** operatively coupled to the consolidated rule generator and configured to provide further optimization of the generated rule set in accordance with certain embodiments of the present invention.

Optionally, the rule generator may comprise a sniffer **(46)** operatively coupled to the log DB and capable of monitoring and/or capturing the network traffic to be controlled by the security gateway and of generating respective log records as required in accordance with operation detailed with reference to **Figs. 2-3****.**

Those skilled in the art will readily appreciate that the invention is not bound by the configuration of **Fig. 4****;** equivalent and/or modified functionality may be consolidated or divided in another manner and may be implemented in software, firmware, hardware, or any combination thereof. Those skilled in the art will also readily appreciate that the data repositories may be consolidated or divided in other manner; some of these databases may be shared with other systems, including 3rd party equipment.

It is to be understood that the invention is not limited in its application to the details set forth in the description contained herein or illustrated in the drawings. The invention is capable of other embodiments and of being practiced and carried out in various ways. It should be noted that the invention is not bound by the specific algorithm of processing or specific structure. Those versed in the art will readily appreciate that the invention is, likewise, applicable to any other processing or presentation with equivalent and/or modified functionality which may be consolidated or divided in another manner.

It will also be understood that the invention further contemplates a machine-readable memory tangibly embodying a program of instructions executable by the machine for executing the method of the invention.

Those skilled in the art will readily appreciate that various modifications and changes can be applied to the embodiments of the invention as hereinbefore described without departing from its scope, defined in and by the appended claims.

## Claims

1. A generator of rules to be used for configuring a security gateway, the generator comprising:
a) a first repository configured to accommodate an initial set of conditions;
b) a second repository configured to accommodate log records of communication events; and
c) a processor operatively coupled to the first repository and the second repository and comprising a generator of transformation-based rule-set adapted for generating a transformation-based rule-set by transforming those accommodated log records which correspond to the initial set of conditions into respective rules, wherein values of fields engaged in each rule are generated as corresponding to values of fields in respective log record, and the action is generated as corresponding to the initial set of conditions; and
wherein the processor is further configured to process the transformation-based rule-set so as to generate an operable rule-set.

2. The generator of Claim 1 further comprising a sniffing unit operatively coupled to the second repository and capable of capturing network traffic to be controlled by the security gateway and of generating respective log records to be accommodated in the second repository, wherein the processor is configured to define the action in all rules corresponding to said generated log records as "Accept".

3. The generator of Claims 1 or 2 wherein the initial set of conditions is related to at least part of the traffic to be controlled by the security gateway and comprises only one rule, this rule permitting any traffic between any data network resources, and wherein at least part of the log records accommodated in the second repository is generated by the security gateway configured to control said at least part of traffic in accordance with said initial set of conditions.

4. The rule-set generator of any one of Claims 1 - 3 wherein the processor further comprises a generator of consolidated rule-set operatively coupled to the generator of the transformation-based rule-set and configured to process the transformation-based rule-set as follows:
a) to identify and remove duplicate rules among respective transformation-based rules, thus giving rise to remaining rules,
b) to provide each remaining rule with an initial hit count characterizing the number of respective duplicated rules before removing;
c) to consolidate the remaining rules by engaged fields respectively, thus giving rise to consolidated rules; and
d) to provide each consolidated rule with a consolidated hit count calculated by summarizing the initial hit counts of the rules consolidated in the respective consolidated rule.

5. The generator of Claim 4 wherein the consolidation comprises combining a range of IP addresses of respective sources and/or destinations in a sub-network.

6. The generator of Claim 5 wherein combining in a sub-network is provided in accordance with a minimal sub-network size parameter and/or, if said range of IP addresses is non-consecutive and comprises missing IP addresses, in accordance with a Subnet Threshold Parameter (STM) **characterized by** a relationship between an allowable number of the missing IP addresses in a sub- network and a number of addresses in a sub-network resulting from said combining.

7. The generator of any one of Claims 1-6 wherein the processor further comprises an optimizing block operatively coupled to the generator of consolidated rule-set and/or the generator of the transformation-based rule-set, the optimizing block is configured to check if value(s) of one or more fields of a transformed rule and/or a consolidated rule fit certain predefined conditions, and if "Yes", to replace said value(s) by predefined value(s) corresponding to said predefined condition.

8. A method of automated configuration of a security gateway, the method comprising:
a) setting-up an initial set of conditions;
b) obtaining log records of communication events corresponding to the initial rule-set so as to obtain a sufficient amount of log records, said sufficient amount **characterized by** achieving a certain threshold and/or by terminating a certain substantial collection period;
c) transforming the obtained log records into respective rules, wherein source, destination and service fields in each rule are generated as corresponding to source, destination and service values in respective obtained log record, and the action is generated as corresponding to the initial set of conditions, thus giving rise to a transformation-based rule-set; and
d) processing the transformation-based rule-set so as to generate an operable rule-set.

9. The method of Claim 8 wherein the initial set of conditions comprises only one rule, this rule permitting any traffic between any data network resources.

10. The method of Claims 8 or 9 wherein at least part of the obtained log records is generated by the security gateway configured to control at least part of traffic in accordance with said initial rule-set and/or at least part of the log records is obtained by sniffing the traffic to be controlled by the security gateway and logging respective communication events.

11. The method of any one of Claims 8-10 wherein the processing of transformation-based rule-set comprises:
a) identifying and removing duplicate rules among respective transformation-based rules, thus giving rise to remaining rules, wherein each remaining rule is provided with an initial hit count characterizing the number of respective duplicated rules before removing; and
b) consolidating the remained rules by source, destination and service respectively, thus giving rise to consolidated rules, wherein each consolidated rule is provided with a consolidated hit count calculated by summarizing the initial hit counts of the rules consolidated in the respective consolidated rule.

12. The method of Claim 11 wherein consolidating comprises combining a range of IP addresses of respective sources and/or destinations in a sub-network.

13. The method of Claim 12 wherein combining in a sub-network is provided in accordance with a minimal sub-network size parameter and/or, if said range of IP addresses is non-consecutive and comprises missing IP addresses, in accordance with a Subnet Threshold Parameter (STM) **characterized by** a relationship between an allowable number of the missing IP addresses and a number of addresses in a sub-network resulting from said combining.

14. The method of any one of Claims 8-13 further comprising checking if value(s) of one or more fields of a transformed rule and/or a consolidated rule fit certain predefined conditions, and if "Yes", replacing said value(s) by predefined value(s) corresponding to the condition.

15. A computer program comprising a computer program code means for performing all the stages of Claim 8 when said program is run on a computer and/or embodied on a computer readable medium.
